# EUROPÄISCHE PATENTSCHRIFT

(11) **EP 3 731 039 B1**
(45) Veröffentlichungstag und Bekanntmachung des Hinweises auf die Patenterteilung: **22.09.2021**
(21) Anmeldenummer: 20157370.6
(22) Anmeldetag: 14.02.2020
(51) Int. Cl.: G05B 15/02, G05B 19/042, G05B 19/10

(54) **ELEKTRISCHES/ELEKTRONISCHES INSTALLATIONSSYSTEM**
ELECTRIC/ELECTRONIC INSTALLATION SYSTEM
SYSTÈME D'INSTALLATION ÉLECTRIQUE/ÉLECTRONIQUE

(30) Priorität: 25.04.2019 DE 102019110652
(43) Veröffentlichungstag der Anmeldung: 28.10.2020
(73) Patentinhaber: Insta GmbH, 58509 Lüdenscheid (DE)
(72) Erfinder: Schigelski, Gordian, 58509 Lüdenscheid (DE); Winkel, Nicolas, 58509 Lüdenscheid (DE)

(56) Entgegenhaltungen:
- DE-A1-102014 220 059
- DE-U1- 20 321 235
- DE-U1-202016 106 008
- US-A1- 2013 086 497

## Beschreibung

Die vorliegende Erfindung geht von einem gemäß Oberbegriff des Hauptanspruches konzipierten elektrischen/elektronischen Installationssystem für Gebäude aus.

Die Aktoren derartiger elektrischer/elektronischer Installationssysteme sind in der Regel dafür vorgesehen, über ihre Lastausgänge auf besonders komfortable Art und Weise eine Vielzahl von in Gebäuden installierte Lasten, wie Jalousieantriebe, Beleuchtungseinrichtungen, Heizung, Lüftung und so weiter bedarfsgerecht zu beeinflussen. Zu diesem Zweck sind bei solchen elektrischen/elektronischen Installationssystemen Aktoren mit verschiedenen Funktionalitäten bekannt geworden, die vorzugsweise als Reiheneinbaugeräte ausgeführt und zur Installation in Schaltschränken vorgesehen sind. In der Regel sind solche elektrische/elektronische Aktoren zum Anschluss an ein Bussystem vorgesehen.

Durch die DE 10 2012 107 216 B4 ist ein solcher Aktor für derartige elektrische/elektronischen Installationssysteme bekannt geworden. Dieser Aktor ist für den Anschluss an ein Bussystem eines Gebäudes vorgesehen und weist zur Beeinflussung von angeschlossenen beziehungsweise zugeordneten Lasten mehrere Lastausgänge auf. Zur manuellen Beeinflussung von zugehörigen Lasten sind mehrere Betätigungselemente vorhanden, wobei zudem ein zweites Betätigungselement vorgesehen ist, welches zur Programmierung dient. Zudem sind mehrere Anzeigeelemente vorhanden. Oftmals weisen derartige Elektrische/elektronische Installationssystemen eine Vielzahl solcher Aktoren auf, welche als Reiheneinbaugeräte ausgeführt und gemeinsam in einem Schaltschrank untergebracht sind. Oftmals sind die Anzeigeelemente dieser Aktoren nur temporär aktiv, zum Beispiel um Energie zu sparen. Aus diesem Grund muss der Anwender/Installateur, um sich einen Überblick über den Status der Lastausgänge der einzelnen Aktoren der elektrischen/elektronischen Installationsanordnung verschaffen zu können, eine manuelle Betätigung bei jedem der Aktoren vornehmen, damit die Anzeigeelemente aktiv geschaltet werden. Oftmals erfolgt zudem nach einiger Zeit, zum Beispiel nach zwei Minuten, aus Energiespargründen automatisch wieder eine Deaktivierung der Anzeigeelemente, was dazu führt, dass der Anwender/Installateur den Aktivierungsvorgang der Anzeigeelemente gegebenenfalls bei allen Aktoren erneut starten muss. Eine derartige Ausführung der elektrischen/elektronischen Installationsanordnung verursacht ein umständliches und zeitaufwändiges Händling für den Anwender/Installateur.

Zudem ist durch die DE 203 21 235 U1 ein Aktor mit mehreren Kanälen, normalerweise vorgesehen zur Beeinflussung von zugehörigen Funktionsgeräten über einen Busbetrieb und bedarfsweise auch vorgesehen zur manuellen Beeinflussung über vorhandene Betätigungselemente bekannt geworden, wobei die Betriebszustände der Funktionsgeräte über zugeordnete Anzeigeelemente verdeutlicht werden und wobei alle Betätigungselemente in einer einzigen, zumindest aus zwei Eingabetasten bestehenden Bediengruppe zusammengefasst sind. Jedem Kanal ist zumindest ein einziges Anzeigeelement zugeordnet, wobei die Anzeigeelemente aller Kanäle in einer separat angeordneten Anzeigegruppe zusammengefasst sind. An einem derartigen Aktor kann bedarfsweise direkt zumindest ein Erweiterungsmodul angekoppelt werden, wobei durch die Ankopplung ein mechanisch und datentechnisch miteinander in Verbindung stehendes Aktormodul gebildet wird.

Ausgehend von derart ausgeführten elektrischen/elektronischen Installationssystemen liegt der vorliegenden Erfindung die Aufgabe zugrunde, ein Installationssystem zu schaffen, bei welchem die Aktivierung der den Lastausgängen zugehörigen Anzeigeelemente aller Aktoren des elektrischen/elektronischen Installationssystems durch eine einzige manuelle Betätigung eines einzigen ersten Betätigungselementes eines beliebigen Aktors erfolgt.

Erfindungsgemäß wird diese Aufgabe durch die im Hauptanspruch angegebenen Merkmale gelöst.

Bei einer solchen Ausbildung ist besonders vorteilhaft, dass sich der Anwender/Installateur, selbst bei der Notwendigkeit, die Aktivierung der den Lastausgängen zugehörigen Anzeigeelemente einer Vielzahl von Aktoren erneut starten zu müssen, auf besonders einfache und schnelle Art und Weise einen Überblick über den Status der Lastausgänge eines jeden einzelnen Aktors verschaffen kann.

Weitere vorteilhafte Ausgestaltungen des erfindungsgemäßen Gegenstandes sind in den Unteransprüchen angegeben. Anhand eines Ausführungsbeispieles sei die Erfindung im Prinzip näher erläutert, dabei zeigt:

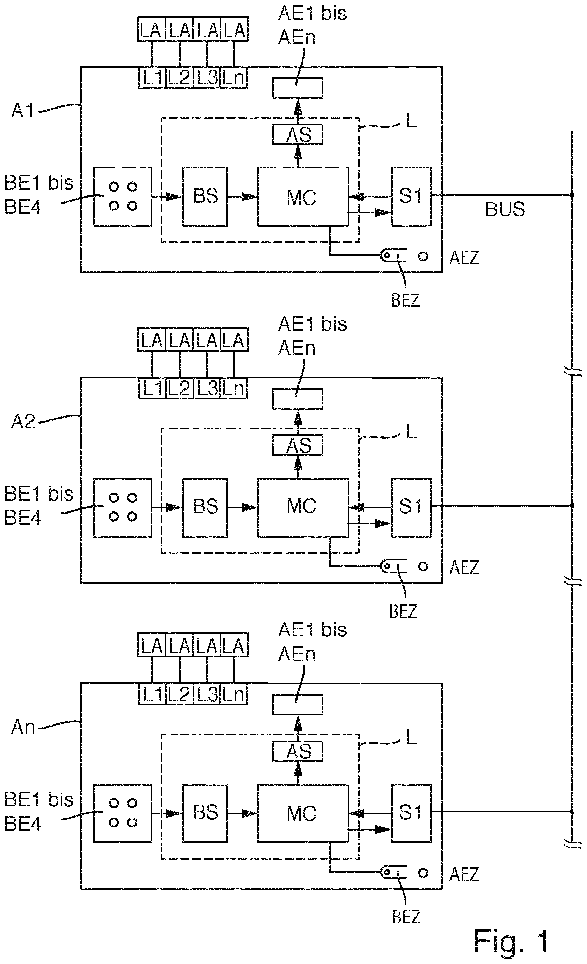

- Fig. 1:: prinziphaft ein mehrere Aktoren umfassendes elektrisches/elektronisches Installationssystem, als Blockschaltbild;

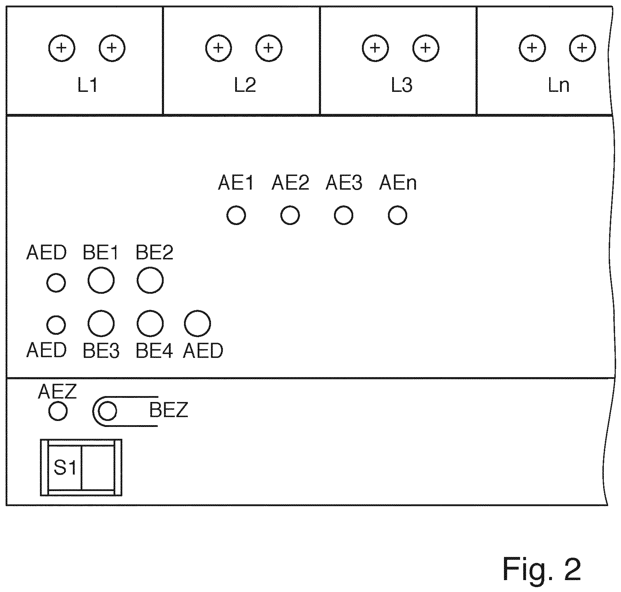

- Fig. 2:: prinziphaft einen Aktor eines solchen elektrischen/elektronischen Installationssystems mit vier Lastausgängen beziehungsweise Kanälen, in der Draufsicht.

Wie aus den Figuren hervorgeht, weist das für den Einsatz in Gebäuden vorgesehene elektrische/elektronische Installationssystem eine Vielzahl von jeweils als Reiheneinbaugerät ausgeführten Aktoren A1 bis An auf, welche über ein Bussystem BUS miteinander in Verbindung stehen. Jeder der Aktoren A1 bis An weist mehrere (vier) Lastausgänge L1 bis Ln beziehungsweise Kanäle auf, die zur Beeinflussung von angeschlossenen (zugeordneten) Lasten LA vorgesehen sind, wobei jedem Lastausgang L1 bis Ln ein Anzeigeelement AE1 bis AEn zugeordnet ist. Die Aktoren A1 bis An weisen jeweils mehrere erste Betätigungselemente BE1 bis BE4 auf, die zur bedarfsweisen, manuellen Beeinflussung der angeschlossenen (zugeordneten) Lasten LA vorgesehen sind. Es ist zumindest ein zweites Betätigungselement BEZ vorgesehen, welches zur Programmierung dient. Ausgelöst durch die Betätigung eines der ersten Betätigungselemente BE1 bis BE4 ist über die Logikeinheit L eines jeden Aktors A1 bis An jeweils zumindest ein Anzeigeelement AE1 bis AEn des betreffenden Aktors A1 bis An beeinflussbar. Zum Zweck der gleichzeitigen Beeinflussung von Anzeigeelementen AE1 bis AEn mehrerer Aktoren A1 bis An stehen die Logikeinheiten L der Aktoren A1 bis An datentechnisch über das Bussystem BUS miteinander in Verbindung, und weist die Logikeinheit L eines jeden Aktors A1 bis An je eine Betätigungselementeauswertestufe BS und je eine Anzeigeelementeaktivierungsstufe AS auf.

Wie des Weiteren aus den Figuren hervorgeht, sind gemäß des vorliegenden Ausführungsbeispiels vier Betätigungselemente BE1 bis BE4 eines jeden Aktors A1 bis An zu einer Betätigungselementengruppe zusammengefasst. Vier Anzeigeelemente AE1 bis AEn sind bei jedem der Aktoren A1 bis An zu einer Anzeigeeinheit zusammengefasst. Die Anzeigeelement AE1 bis AEn sind jeweils als Leuchtdiode LED ausgeführt. Jeder Aktor A1 bis An weist vier Lastausgänge L1 bis Ln auf, wobei jedem Lastausgang L1 bis Ln ein als Leuchtdiode LED ausgeführtes Anzeigeelement AE1 bis AEn zugeordnet ist. Jeder Aktor A1 bis An weist zudem ein zweites Betätigungselement BEZ auf, welches zur Betätigung eines Programmierschalters vorgesehen ist. Diesem zweiten Betätigungselement BEZ ist ein als Programmier-LED ausgeführtes zweites Anzeigeelement AEZ zugeordnet. Jeder der Aktoren A1 bis An verfügt über eine erste Schnittstelle S1, über welche diese an ein Bussystem BUS angeschlossen sind. Beim vorliegenden Ausführungsbeispiel ist die erste Schnittstelle S1 dafür vorgesehen, die Aktoren A1 bis An an ein als KNX-Bussystem ausgeführtes Bussystem BUS zum Anschluss zu bringen. Die Logikeinheit L eines jeden Aktors A1 bis An weist einen Mikrocontroller MC auf.

Vorteilhafterweise ermöglicht ein derart ausgestaltetes elektrisches/elektronisches Installationssystem dem Anwender/Installateur auf besonders schnelle und einfache Art und Weise, sich einen Überblick über den Status der Lastausgänge L1 bis Ln eines jeden einzelnen Aktors A1 bis An zu verschaffen. Vorteilhafterweise geschieht dies für alle Aktoren A1 bis An besonders schnell durch die Betätigung eines einzigen ersten Betätiungselementes BE1 bis BE4 an einem beliebigen Aktor A1 bis An.

Beispielsweise wird durch ein kurzzeitiges Betätigen des ersten Bedienelementes BE1 am Aktor A1 über die Betätigungselementeauswertestufe BS und den Microcontroller MC der Logikeinheit L ein Anzeigemodus aktiviert. Die Anzeigeelemente AE1 bis AEn werden über die Anzeigeelementeaktivierungsstufe AS angesteuert und zeigen dadurch den aktuellen Status der Lastausgänge L1 bis Ln des Aktors A1 an. Gleichzeitig wird über den Microcontroller MC der Logikeinheit L des Aktors A1 ein Steuersignal erzeugt, welches über die erste Schnittstelle S1 in das Bussystem BUS abgegeben wird. Über das Bussystem BUS empfangen die weiteren Aktoren A2 bis An dieses Steuersignal, wodurch bei diesen Aktoren A2 bis An gleichzeitig der Anzeigemodus aktiviert wird und daraufhin über ihre Anzeigeelementeaktivierungsstufe AS jeweils auch ihre Anzeigeelemente AE1 bis AEn angesteuert werden, um den aktuellen Status ihrer Lastausgänge L1 bis Ln anzuzeigen. Bei einer entsprechenden Einstellung der Logikeinheit L der Aktoren A1 bis An besteht zudem die Möglichkeit, mit dem Aktivieren des Anzeigemodus einen Handbedienmodus zu aktivieren, um die angeschlossenen beziehungsweise zugehörigen Lasten LA manuell beeinflussen zu können.

Nach einer einstellbaren Zeit von zum Beispiel einer Minute wechseln die Aktoren A1 bis An aus ihrem Anzeigemodus wieder in ihren Standby-Modus und schalten über ihre Anzeigeelementeaktivierungsstufe AS ihre Anzeigeelemente AE1 bis AEn wieder aus, um Energie zu sparen.

Eine solche datentechnische Verknüpfung der Aktoren A1 bis An ermöglicht vorteilhafterweise somit das gleichzeitige Anzeigen der Statis aller Lastausgänge L1 bis Ln aller Aktoren A1 bis An über nur einen einzigen Tastendruck eines ersten Betätigungselementes BE1 bis BE4 (beispielsweise des ersten Betätigungselementes BE1) an einem beliebigen Aktor A1 bis An.

Es besteht zudem die Möglichkeit, zum Beispiel über eine einzige langzeitige Betätigung des ersten Bedienelementes BE1 am Aktor A1 eine dauerhafte Aktivierung des Anzeigemodus und damit auch eine Aktivierung der Anzeigeelemente AE1 bis AEn aller Aktoren A1 bis An vorzunehmen. Eine solche dauerhafte Aktivierung des Anzeigemodus kann dann zum Beispiel über eine einzige weitere langzeitige Betätigung des ersten Bedienelementes BE1 am Aktor A1 wieder außer Kraft genommen werden. Beispielsweise kann jedoch auch vorgesehen sein, dass über eine einzige langzeitige Betätigung des ersten Bedienelementes BE2 am Aktor A1 die Aktivierung des Anzeigemodus wieder außer Kraft genommen wird und alle Aktoren A1 bis An wieder in ihren Standby-Modus schalten. Um Energie zu sparen, sind dann alle Anzeigeelemente AE1 bis AEn aller Aktoren A1 bis An wieder ausgeschaltet. Bei einer entsprechenden Einstellung der Logikeinheit L der Aktoren A1 bis An besteht zudem die Möglichkeit, mit dem Aktivieren des Anzeigemodus zudem einen Handbedienmodus zu aktivieren, um die angeschlossenen beziehungsweise zugehörigen Lasten LA manuell beeinflussen zu können.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen näher erläutert werden müssen.

### Bezugszeichenliste

- A1 bis An: Aktoren
- AE1 bis AEn: Anzeigeelemente
- AED: Dritte Anzeigeelemente
- AEZ: Zweites Anzeigeelement
- AS: Anzeigeelementeaktivierungsstufe
- BE1 bis BE4: Erste Betätigungselemente
- BEZ: Zweites Betätigungselement
- BS: Betätigungselementeauswertestufe
- BUS: Bussystem
- L: Logikeinheit
- LA: Lasten
- LED: Leuchtdiode
- L1 bis Ln: Lastausgänge
- MC: Mikrocontroller
- S1: Erste Schnittstelle

## Patentansprüche

1. Elektrisches/elektronisches Installationssystem für Gebäude mit zumindest zwei über ein Bussystem (BUS) miteinander in Verbindung stehenden, jeweils als Reiheneinbaugerät ausgeführten Aktoren (A1 bis An), welche jeweils mehrere Lastausgänge (L1 bis Ln) aufweisen, die zur Beeinflussung von angeschlossenen Lasten (LA) vorgesehen sind, wobei jedem Lastausgang (L1 bis Ln) zumindest ein Anzeigeelement (AE1 bis AEn) zugeordnet ist, und welche Aktoren (A1 bis An) jeweils mehrere erste Betätigungselemente (BE1 bis BE4) aufweisen, die zur bedarfsweisen, manuellen Beeinflussung der angeschlossenen Lasten (LA) vorgesehen sind, und wobei zumindest ein zweites Betätigungselement (BEZ) vorgesehen ist, welches zur Programmierung dient, und wobei ausgelöst durch die Betätigung eines der ersten Betätigungselemente (BE1 bis BE4) über die Logikeinheit (L) eines jeden Aktors (A1 bis An) jeweils zumindest ein Anzeigeelement (AE1 bis AEn) des betreffenden Aktors (A1 bis An) beeinflussbar ist, **dadurch gekennzeichnet, dass** zum Zweck der gleichzeitigen Beeinflussung von Anzeigeelementen (AE1 bis AEn) mehrerer Aktoren (A1 bis An) die Logikeinheiten (L) der Aktoren (A1 bis An) datentechnisch über das Bussystem (BUS) miteinander in Verbindung stehen, und dass die Logikeinheit (L) eines jeden Aktors (A1 bis An) eine Betätigungselementeauswertestufe (BS) und eine Anzeigeelementeaktivierungsstufe (AS) aufweist.

2. Elektrisches/elektronisches Installationssystem nach Anspruch 1, **dadurch gekennzeichnet, dass** zumindest zwei erste Betätigungselemente (BE1 bis BE4) eines jeden Aktors (A1 bis An) zu einer Betätigungselementengruppe zusammengefasst sind.

3. Elektrisches/elektronisches Installationssystem nach Anspruch 1 oder 2, **dadurch gekennzeichnet, dass** zumindest zwei Anzeigeelemente (AE1 bis AEn) eines jeden Aktors (A1 bis An) zu einer Anzeigeeinheit zusammengefasst sind.

4. Elektrisches/elektronisches Installationssystem nach einem der Ansprüche 1 bis 3 **dadurch gekennzeichnet, dass** zumindest ein Anzeigeelement (AE1 bis AEn) als Leuchtdiode (LED) ausgeführt ist.

5. Elektrisches/elektronisches Installationssystem nach einem der Ansprüche 1 bis 4, **dadurch gekennzeichnet, dass** jeder Aktor (A1 bis An) zumindest zwei Lastausgänge (L1 bis Ln) aufweist, und dass jedem Lastausgang (L1 bis Ln) zumindest ein Anzeigeelement (AE1 bis AEn) zugeordnet ist.

6. Elektrisches/elektronisches Installationssystem nach einem der Ansprüche 1 bis 5, **dadurch gekennzeichnet, dass** zumindest einem zweiten Bedienelement (BEZ) zumindest ein zweites Anzeigeelement (AEZ) zugeordnet ist.

7. Elektrisches/elektronisches Installationssystem nach einem der Ansprüche 1 bis 6, **dadurch gekennzeichnet, dass** zumindest ein, über zumindest eine erste Schnittstelle (S1) anschließbares Bussystem (BUS) als KNX-Bussystem ausgeführt ist.

8. Elektrisches/elektronisches Installationssystem nach einem der Ansprüche 1 bis 7, **dadurch gekennzeichnet, dass** zumindest ein über zumindest eine erste Schnittstelle (S1) anschließbares Bussystem (BUS) als DALI-Bussystem ausgeführt ist.

9. Elektrisches/elektronisches Installationssystem nach einem der Ansprüche 1 bis 8, **dadurch gekennzeichnet, dass** zumindest einer der Aktor (A1 bis An) eine weitere Schnittstelle zum Anschluss eines weiteren Bussystems aufweist.

10. Elektrisches/elektronisches Installationssystem nach einem der Ansprüche 1 bis 9, **dadurch gekennzeichnet, dass** das zweite Betätigungselement (BEZ) eines jeden Aktors (A1 bis An) zur Betätigung eines Programmierschalters vorgesehen ist, welchem ein als Programmier-LED ausgeführtes zweites Anzeigeelement (AEZ) zugeordnet ist.

11. Elektrisches/elektronisches Installationssystem nach einem der Ansprüche 1 bis 10, **dadurch gekennzeichnet, dass** zumindest einem der Betätigungselemente (BE1 bis BE4) zumindest ein als LED ausgeführtes drittes Anzeigeelement (AED) zugeordnet ist.

12. Elektrisches/elektronisches Installationssystem nach einem der Ansprüche 1 bis 11, **dadurch gekennzeichnet, dass** die Logikeinheit (L) eines jeden Aktors (A1 bis An) zumindest einen Mikrocontroller (MC) aufweist.

## Claims

1. Electric/electronic installation system for buildings with at least two actuators (A1 to An) linked via a bus system (BUS), each designed as rail-mounted device, each with several load outputs (L1 to Ln) for influencing connected loads (LA), wherein at least one display element (AE1 to AEn) is assigned to each load output (L1 to Ln), and which actuators (A1 to An) each provide several first operating elements (BE1 to BE4) for manual influencing of the connected loads (LA) on demand, and wherein at least one second operating element (BEZ) is provided for programming, and wherein, released by operating one of the first operating elements (BE1 to BE4), at least one display element (AE1 to AEn) each of the relevant actuator (A1 to An) can be influenced via the logic unit (L) of each actuator (A1 to An), **characterized by the fact** that for the purpose of simultaneously influencing the display elements (AE1 to AEn) of a plurality of actuators (A1 to An) the logic units (L) of the actuators (A1 to An) are connected to one another in terms of data technology via the bus system (BUS), and that the logic unit (L) of each actuator (A1 to An) has an actuator evaluation stage (BS) and a display element activation stage (AS).

2. Electric/electronic installation system in accordance with Claim 1, **characterized by the fact** that at least two first operating elements (BE1 to BE4) of each actuator (A1 to An) are combined to one group of operating elements.

3. Electric/electronic installation system in accordance with Claim 1 or 2, **characterized by the fact** that at least two display elements (AE1 to AEn) of each actuator (A1 to An) are combined to one display unit.

4. Electric/electronic installation system in accordance with any of Claims 1 to 3 **characterized by the fact** that at least one display element (AE1 to AEn) is designed as light emitting diode (LED).

5. Electric/electronic installation system in accordance with any of Claims 1 to 4, **characterized by the fact** that each actuator (A1 to An) has at least two load outputs (L1 to Ln), and that at least one display element (AE1 to AEn) is assigned to each load output (L1 to Ln).

6. Electric/electronic installation system in accordance with any of Claims 1 to 5, **characterized by the fact** that at least one second display element (AEZ) is assigned to at least one second operating element (BEZ).

7. Electric/electronic installation system in accordance with any of Claims 1 to 6, **characterized by the fact** that at least one bus system (BUS), to be connected via at least one first interface (S1), is designed as KNX bus system.

8. Electric/electronic installation system in accordance with any of Claims 1 to 7, **characterized by the fact** that at least one bus system (BUS), to be connected via at least one first interface (S1), is desinged as DALI bus system.

9. Electric/electronic installation system in accordance with any of Claims 1 to 8, **characterized by the fact** that at least one of the actuators (A1 to An) has a further interface for connection of a further bus system.

10. Electric/electronic installation system in accordance with any of Claims 1 to 9, **characterized by the fact** that the second operating element (BEZ) of each actuator (A1 to An) is provided for operation of a programming switch, to which a second display element (AEZ), designed as programming LED, is assigned.

11. Electric/electronic installation system in accordance with any of Claims 1 to 10, **characterized by the fact** that at least one third display element (AED) designed as LED is assigned to at least one of the operating elements (BE1 to BE4).

12. Electric/electronic installation system in accordance with any of Claims 1 to 11, **characterized by the fact** that the logic unit (L) of each actuator (A1 to An) provides at least one microcontroller (MC).

## Revendications

1. Système d'installation électrique/électronique pour bâtiments avec au moins deux actionneurs (A1 à An), reliés entre eux par un système de bus (BUS), chacun étant conçu comme un dispositf d'installation en série et présentant plusieurs sorties de charge (L1 à Ln) prévues pour influencer les charges raccordées (LA), dans lequel au moins un élément d'affichage (AE1 à AEn) est associé à chaque sortie de charge (L1 à Ln), et les actionneurs (A1 à An) présentent chacun une pluralité de premiers éléments d'actionnement (BE1 à BE4) qui sont prévus pour influencer manuellement les consommateurs raccordés (LA) en cas de besoin, et dans lequel est prévu au moins un deuxième élément d'actionnement (BEZ) qui sert à la programmation, et dans lequel, déclenché par l'actionnement de l'un des premiers éléments d'actionnement (BE1 à BE4), au moins un élément d'affichage (AE1 à AEn) de l'actionneur concerné (A1 à An) peut être influencé par l'intermédiaire de l'unité logique (L) de chaque actionneur (A1 à An), **caractérisé en ce que** pour influencer simultanément des éléments d'affichage (AE1 à AEn) de plusieurs actionneurs (A1 à An), les unités logiques (L) des actionneurs (A1 à An) sont reliées entre elles par le système bus (BUS) en ce qui concerne la technique des données, et **en ce que** l'unité logique (L) de chaque actionneur (A1 à An) présente un étage d'évaluation d'actionneurs (BS) et un étage d'activation d'éléments d'affichage (AS).

2. Système d'installation électrique/électronique selon la revendication 1, **caractérisé en ce qu'au** moins deux premiers éléments d'actionnement (BE1 à BE4) de chaque actionneur (A1 à An) sont combinés pour former un groupe d'éléments d'actionnement.

3. Système d'installation électrique/électronique selon la revendication 1 ou 2, **caractérisé en ce qu'au** moins deux éléments d'affichage (AE1 à AEn) de chaque actionneur (A1 à An) sont combinés pour former une unité d'affichage.

4. Système d'installation électrique/électronique selon l'une des revendications 1 à 3 **caractérisé en ce qu'au** moins un élément d'affichage (AE1 à AEn) est conçu comme une diode électroluminescente (LED).

5. Système d'installation électrique/électronique selon l'une des revendications 1 à 4, **caractérisé en ce que** chaque actionneur (A1 à An) présente au moins deux sorties de charge (L1 à Ln), et **en ce qu'**au moins un élément d'affichage (AE1 à AEn) est associé à chaque sortie de charge (L1 à Ln).

6. Système d'installation électrique/électronique selon l'une des revendications 1 à 5, **caractérisé en ce qu'au** moins un deuxième élément de d'affichage (AEZ) est attribué à au moins un deuxième élément de commande (BEZ).

7. Système d'installation électrique/électronique selon l'une des revendications 1 à 6, **caractérisé en ce qu'au** moins un système de bus (BUS) pouvant être connecté par l'intermédiaire d'au moins une première interface (S1) est conçu comme un système de bus KNX.

8. Système d'installation électrique/électronique selon l'une des revendications 1 à 7, **caractérisé en ce qu'au** moins un système de bus (BUS) pouvant être connecté par au moins une première interface (S1) est conçu comme système de bus DALI.

9. Système d'installation électrique/électronique selon l'une des revendications 1 à 8, **caractérisé en ce qu'au** moins un des actionneurs (A1 à An) présente une autre interface pour raccorder un autre système de bus.

10. Système d'installation électrique/électronique selon l'une des revendications 1 à 9, **caractérisé en ce que** le deuxième élément d'actionnement (BEZ) de chaque actionneur (A1 à An) est prévu pour actionner un commutateur de programmation, auquel est associé un deuxième élément d'affichage (AEZ) conçu comme une LED de programmation.

11. Système d'installation électrique/électronique selon l'une des revendications 1 à 10, **caractérisé en ce qu'au** moins un troisième élément d'affichage (AED) conçu comme une LED est associé à au moins un des éléments d'actionnement (BE1 bis BE4).

12. Système d'installation électrique/électronique selon l'une des revendications 1 à 11, **caractérisé en ce que** l'unité logique (L) de chaque actionneur (A1 à An) comprend au moins un microcontrôleur (MC).
